# EUROPEAN PATENT APPLICATION

(11) **EP 4 628 352 A1**
(43) Date of publication of application: **08.10.2025**
(21) Application number: 25163522.3
(22) Date of filing: 13.03.2025
(51) Int. Cl.: B60L 53/30, B60L 53/63, B60L 53/65, B60L 53/66, B60L 53/68, B60L 58/12

(54) **AN AUTOMATED ELECTRIC VEHICLE (EV) CONDITIONING SYSTEM THAT TAKES INTO CONSIDERATION PUBLIC TRANSPORTATION INFORMATION OF AN EV DRIVER**

(30) Priority: 19.03.2024 US 202418609416
(71) Applicant: Siemens Industry, Inc., Alpharetta, GA 30005 (US)
(72) Inventor: FELDMANN, Daniel, New York, 10022 (US); MIGLIORATI HOLZMANN, Luca, 10245 Berlin (DE)
(74) Representative: Isarpatent

(57) **Abstract**

An automated EV conditioning system (105) based on public transportation information of an EV driver (110) is provided. It comprises an EVSE (112) configured to charge a battery (115) of an EV (117), a CSMS (120) coupled to the EVSE (112), a public transportation tracking platform (122) coupled to the CSMS (120) for tracking an EV location (125), a public transportation (127), and/or an EV driver phone (130) through an App (132), which can confirm the EV driver (110) actually hopped on a train (135) or a bus and an automated mechanism (140) including an algorithm (145) to take into consideration public transportation schedules (147) into EV charging by the EVSE (112). The platform (122) is coupled to the public transportation (127) such that the EV driver (110) arriving via the public transportation (127) expects the EV (117) ready to travel. The system permits the EV driver (110) to only set a single target SoC (150) in the EV (117) or an App (132) and have the EV (117) actually with that SoC and with a conditioned cabin automatically (155).

## Description

### BACKGROUND

### 1. Field

Aspects of the present invention generally relate to an automated electric vehicle (EV) conditioning system that takes into consideration public transportation information of an EV driver.

### 2. Description of the Related Art

Parking lots in public transportation hubs such as Airports and Train Stations are common places for electric vehicle (EV) charging stations. EV chargers can be located both in short-term and long-term parking areas. Depending on the location type, drivers are expected to be charging their vehicles from a few minutes (when picking up a person), to a few hours (on a day trip), to several days or weeks. When vehicles are parked for more than a few hours, it is very likely that there is going to be flexibility on the best time to charge to minimize charging costs for the Charging Point Operator (CPO) that owns the EV charger, and this is currently implemented by several players in the market (using a single day as baseline). That said, performing this would not allow for the car to be ready for the driver upon driver arrival, i.e., while the car battery would be charged, and probably at a low cost for the CPO, the car cabin could be boiling hot or freezing cold depending on the ambient temperature outside. In addition to this, in case of snow in the parking lot scenarios, access to the car could be compromised.

In the case of certain cars (e.g. Tesla), it is possible to schedule a car to be ready to leave at a certain time of the day, manually, which would charge the car at the last hours close to that time, conditioning the battery, and melting snow. However, that does not account for long term parking, and also does not account for uncertainty about arrival time that is inherent with public transportation. It is also possible to remotely turn on the cabin air-conditioner/heater, also manually, something the driver can forget to perform. In summary, these are imperfect methods, which require human planning and intervention.

Therefore, a system is then needed for electric vehicle (EV) conditioning that does not require human planning and intervention.

### SUMMARY

Briefly described, aspects of the present invention relate to a system and a method for a Public Transportation Schedule-based EV conditioning platform that performs charging of a vehicle based on knowledge about the duration of the period in which an EV driver is going to be away from the vehicle, as well as the expected return date/time, the expected weather forecast in the period (including accumulation of snow), the temperature outside the Electric Vehicle while not charging, the desired cabin temperature when the driver is expected to arrive, the expected arrival driver itinerary while in public transportation, real-time updates about the itinerary, the distance/time between the arrival location (e.g. airport gate/terminal, train station gate), the desired energy to be stored in the vehicle (or desired state of charge), the location of the vehicle/EV charger and the location of the driver (from its cellphone). Given all of these conditions, an algorithm calculates the necessary energy to be delivered to the vehicle, and for how long, and at what time interval before the expected driver physical arrival to the vehicle, so the vehicle has the desired final state of charge, it's air conditioner kept the temperature stable, the power that the specific vehicle requires to keep the air conditioner on, and the charging process itself melted the snow blocking the vehicle from moving and the doors from opening. If the EV driver takes longer time to arrive than expected, the EV charger can limit that amount of power delivered to the charger to be only what is necessary to keep the cabin conditioned. The information about the itinerary is received by the platform through calendar synchronization, or through Application Programming Interface (API) integration with airline or train companies, or travel information aggregators. The invention permits the EV driver to only set a single target State of Charge (SoC) in the vehicle or EV charging app and have a vehicle actually with that SoC and with a conditioned cabin automatically, without the need for any additional manual interaction. An automated mechanism to take into consideration public transportation schedules into EV charging is presented.

In accordance with one illustrative embodiment of the present invention, an automated electric vehicle (EV) conditioning system that takes into consideration public transportation information of an EV driver is provided. The system comprises an Electric Vehicle Supply Equipment (EVSE) configured to charge a battery of an EV, a Charging Station Management System (CSMS) coupled to the EVSE, a public transportation tracking platform coupled to the CSMS for tracking an EV location, a public transportation, and/or an EV driver phone through an EV driver App, which can confirm the EV driver actually hopped on a train or a bus and an automated mechanism including software instructions of an algorithm to take into consideration public transportation schedules into EV charging by the EVSE. The public transportation tracking platform is coupled to the public transportation such that the EV driver arriving via the public transportation expects the EV ready to travel. The automated electric vehicle (EV) conditioning system permits the EV driver to only set a single target State of Charge (SoC) in the EV or an EV charging App and have the EV actually with that SoC and with a conditioned cabin automatically, without a need for any additional manual interaction.

In accordance with one illustrative embodiment of the present invention, a method of providing an automated electric vehicle (EV) conditioning system that takes into consideration public transportation information of an EV driver is provided. The method comprises providing an Electric Vehicle Supply Equipment (EVSE) configured to charge a battery of an EV, providing a Charging Station Management System (CSMS) coupled to the EVSE, providing a public transportation tracking platform coupled to the CSMS for tracking an EV location, a public transportation, and/or an EV driver phone through an EV driver App, which can confirm the EV driver actually hopped on a train or a bus and providing an automated mechanism including software instructions of an algorithm to take into consideration public transportation schedules into EV charging by the EVSE. The public transportation tracking platform is coupled to the public transportation such that the EV driver arriving via the public transportation expects the EV ready to travel. The automated electric vehicle (EV) conditioning system permits the EV driver to only set a single target State of Charge (SoC) in the EV or an EV charging App and have the EV actually with that SoC and with a conditioned cabin automatically, without a need for any additional manual interaction.

The above described features and advantages, as well as others, will become more readily apparent to those of ordinary skill in the art by reference to the following detailed description and accompanying drawings. While it would be desirable to provide one or more of these or other advantageous features, the teachings disclosed herein extend to those embodiments which fall within the scope of the appended claims, regardless of whether they accomplish one or more of the above-mentioned advantages.

### BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects.
FIG. 1 illustrates an automated electric vehicle (EV) conditioning system that takes into consideration public transportation information of an EV driver in accordance with an embodiment of the present invention.
FIG. 2 illustrates a method of providing an automated electric vehicle (EV) conditioning system that takes into consideration public transportation information of an EV driver in accordance with an embodiment of the present invention.

### DETAILED DESCRIPTION

Various technologies that pertain to systems and methods that provide an automated electric vehicle (EV) conditioning system that takes into consideration public transportation information of an EV driver. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present application will be described with reference to exemplary non-limiting embodiments.

To facilitate an understanding of embodiments, principles, and features of the present invention, they are explained hereinafter with reference to implementation in illustrative embodiments. In particular, they are described in the context of an automated electric vehicle (EV) conditioning system. Embodiments of the present invention, however, are not limited to use in the described devices or methods.

The components and materials described hereinafter as making up the various embodiments are intended to be illustrative and not restrictive. Many suitable components and materials that would perform the same or a similar function as the materials described herein are intended to be embraced within the scope of embodiments of the present invention.

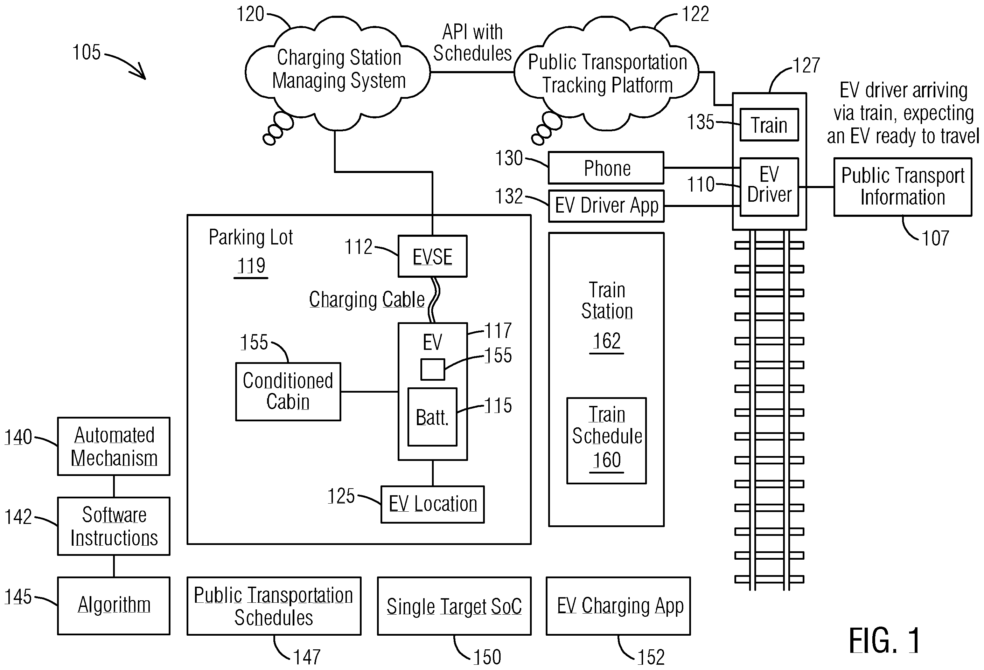

These and other embodiments of the system are provided for providing an automated electric vehicle (EV) conditioning system according to the present disclosure are described below with reference to FIG. 1 herein. The drawing is not necessarily drawn to scale.

Consistent with an embodiment of the present invention, FIG. 1 represents an automated electric vehicle (EV) conditioning system 105 that takes into consideration public transportation information 107 of an EV driver 110 in accordance with an embodiment of the present invention. The automated electric vehicle (EV) conditioning system 105 comprises an Electric Vehicle Supply Equipment (EVSE) 112 configured to charge a battery 115 of an EV 117 parked in a parking lot 119. EVSE systems include the electrical conductors, related equipment, software, and communications protocols that deliver energy efficiently and safely to the vehicle. EVSE equipment is classified as Level 1 (120 volts AC), Level 2 (240 volts, AC), and DC Fast Charger (480 volts DC and higher).

The automated electric vehicle (EV) conditioning system 105 further comprises a Charging Station Management System (CSMS) 120 coupled to the EVSE 112. The CSMS 120 is a platform where multiple charging stations can be managed. Through open protocols, the software behind the platform communicates with the charging stations, in order to view and manage the status and data.

The automated electric vehicle (EV) conditioning system 105 further comprises a public transportation tracking platform 122 coupled to the CSMS 120 for tracking an EV location 125, a public transportation 127, and/or an EV driver phone 130 through an EV driver App 132, which can confirm the EV driver 110 actually hopped on a train 135 or a bus (not shown). The public transportation tracking platform 122 is coupled to the public transportation 127 such that the EV driver 110 arriving via the public transportation 127 expects the EV 117 ready to travel. Public transport (also known as public transportation, public transit, mass transit, or simply transit) is a system of transport for passengers by group travel systems available for use by the general public unlike private transport, typically managed on a schedule, operated on established routes, and that may charge a posted fee for each trip. All public transport runs on infrastructure, either on roads, rail, airways or seaways.

The automated electric vehicle (EV) conditioning system 105 further comprises an automated mechanism 140 including software instructions 142 of an algorithm 145 to take into consideration public transportation schedules 147 into EV charging by the EVSE 112. The automated electric vehicle (EV) conditioning system 105 permits the EV driver 110 to only set a single target State of Charge (SoC) 150 in the EV 117 or an EV charging App 152 and have the EV 117 actually with that SoC and with a conditioned cabin 155 automatically, without a need for any additional manual interaction.

In regards to an electric vehicle, one type of preconditioning can mean warming or cooling the interior before driving. It's one of the great joys of owning an EV: being able to preheat or precool the interior before getting in. Nearly all EVs offer this capability, though some only allow it when the vehicle is plugged into a charger. Preconditioning the interior can be activated automatically if you program your estimated time of departure into the car's infotainment system, and some EVs allow you to do it through an app on your phone. If your EV allows you to precondition the interior without the car being plugged in, you only need to make sure you'll have enough battery power left afterward to get home or to a charging station. Cabin preconditioning refers to the heating or cooling of an electric vehicle's interior cabin. Compared to a combustion engine, electric vehicles do not have enough waste heat to cycle into the cabin. For this reason, air conditioning systems can draw a significant amount of electrical energy whilst bringing the cabin into a comfortable temperature range. Cabin preconditioning, when operated whilst your EV is connected to a charging point, will ensure that your battery energy will not be used, as the energy will be pulled from the electric grid. This leaves your battery charge levels intact, leaving more range available for the journey. Preconditioning can be set in your EV's air-conditioning system; it is also very common for this to be set remotely using a phone app.

In the public transportation schedules 147, a public transportation schedule can be a train schedule 160 at a train station 162 or a bus schedule. A transportation system such as based on the public transportation tracking platform 122 has precise tracking of a train schedule and advertise with a high level of accuracy, on an ongoing basis, when trains are arriving to a station and these are available either planned or real-time, for Application Programming Interface (API) integration.

The automated electric vehicle (EV) conditioning system 105 and the public transportation tracking platform 122 provides a public transportation schedule-based EV conditioning platform. A public transportation schedule includes runs of hundreds of trains/buses with timings of stops and arrival/departure times over many routes covering over hundreds of route-miles. The public transportation schedule-based EV conditioning platform performs charging of the EV 117 based on a knowledge about a duration of a period in which the EV driver 110 is going to be away from the EV 117, as well as an expected return date/time.

The public transportation schedule-based EV conditioning platform performs charging of the EV based on an expected weather forecast in the period (including accumulation of snow), a temperature outside the EV 117 while not charging, a desired cabin temperature when the EV driver is expected to arrive. The public transportation schedule-based EV conditioning platform performs charging of the EV based on an expected arrival driver itinerary while in public transportation, real-time updates about the itinerary, a distance/time between an arrival location (e.g. airport gate/terminal, train station gate), a desired energy to be stored in the EV 117 (or a desired State of Charge(SoC)), a location of the EV 117/EVSE 112 and a location of the EV driver 110 (from its cellphone).

The algorithm 145 calculates a necessary energy to be delivered to the EV 117, and for how long, and at what time interval before the expected EV driver 110 physical arrival to the EV 117, so the EV 117 has a desired final State of Charge (SoC), it's air conditioner kept the temperature stable, a power that a specific vehicle requires to keep the air conditioner on, and a charging process itself melted snow blocking the EV 117 from moving and doors from opening. If the EV driver 117 takes a longer time to arrive than expected, the EVSE 112 can limit that amount of power delivered to the EV 117 to be only what is necessary to keep a cabin conditioned. The state of charge (SOC) of a cell denotes the capacity that is currently available as a function of the rated capacity. The value of the SOC varies between 0% and 100%. If the SOC is 100%, then the cell is said to be fully charged, whereas a SOC of 0% indicates that the cell is completely discharged.

An information about the itinerary is received by the public transportation schedule-based EV conditioning platform through calendar synchronization, or through API integration with airline or train companies, or travel information aggregators.

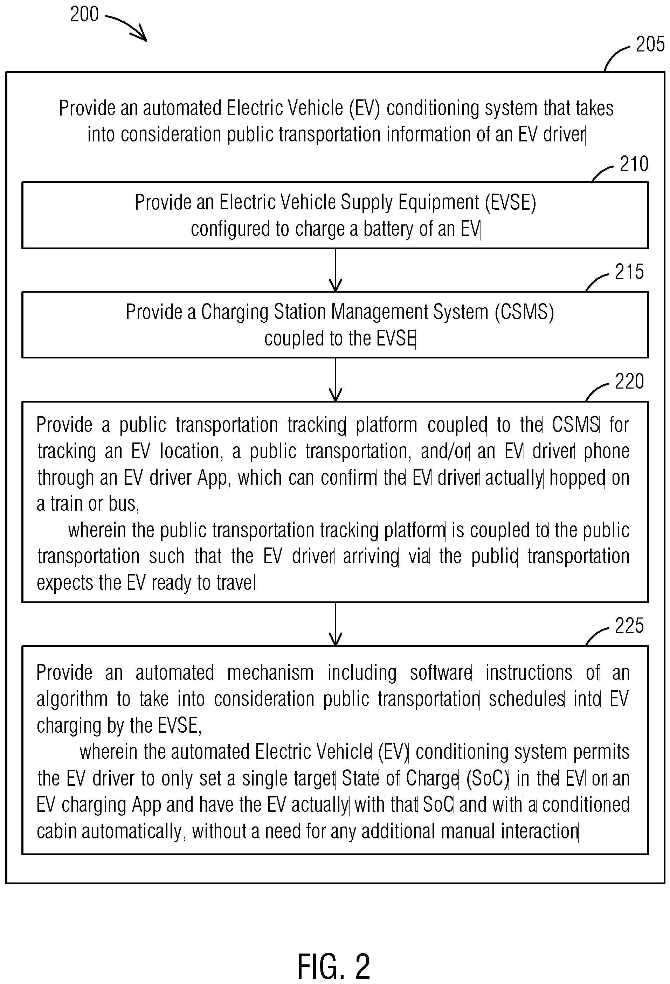

Referring to FIG. 2, it illustrates a method 200 of providing the automated electric vehicle (EV) conditioning system 105 that takes into consideration the public transportation information 107 of the EV driver 110 in accordance with an embodiment of the present invention. Reference is made to the elements and features described in FIG. 1. It should be appreciated that some steps are not required to be performed in any particular order, and that some steps are optional.

The method 200 comprises a step 205 of providing an automated electric vehicle (EV) conditioning system that takes into consideration public transportation information of an EV driver. The method 200 further includes a step 210 of providing an Electric Vehicle Supply Equipment (EVSE) configured to charge a battery of an EV. The method 200 further includes a step 215 of providing a Charging Station Management System (CSMS) coupled to the EVSE. The method 200 further includes a step 220 of providing a public transportation tracking platform coupled to the CSMS for tracking an EV location, a public transportation, and/or an EV driver phone through an EV driver App, which can confirm the EV driver actually hopped on a train or a bus. The public transportation tracking platform is coupled to the public transportation such that the EV driver arriving via the public transportation expects the EV ready to travel. and

The method 200 further includes a step 225 of providing an automated mechanism including software instructions of an algorithm to take into consideration public transportation schedules into EV charging by the EVSE. The automated electric vehicle (EV) conditioning system permits the EV driver to only set a single target State of Charge (SoC) in the EV or an EV charging App and have the EV actually with that SoC and with a conditioned cabin automatically, without a need for any additional manual interaction.

While an automated electric vehicle (EV) conditioning system based on an Electric Vehicle Supply Equipment (EVSE) is described here a range of one or more other systems are also contemplated by the present invention. For example, other systems may be implemented based on one or more features presented above without deviating from the spirit of the present invention.

The techniques described herein can be particularly useful for public transportation schedules into EV charging by the EVSE. While particular embodiments are described in terms of a timing schedule, the techniques described herein are not limited to such transportation information but can also be used with other types of public transportation information.

While embodiments of the present invention have been disclosed in exemplary forms, it will be apparent to those skilled in the art that many modifications, additions, and deletions can be made therein without departing from the spirit and scope of the invention and its equivalents, as set forth in the following claims.

Embodiments and the various features and advantageous details thereof are explained more fully with reference to the non-limiting embodiments that are illustrated in the accompanying drawings and detailed in the following description. Descriptions of well-known starting materials, processing techniques, components and equipment are omitted so as not to unnecessarily obscure embodiments in detail. It should be understood, however, that the detailed description and the specific examples, while indicating preferred embodiments, are given by way of illustration only and not by way of limitation. Various substitutions, modifications, additions and/or rearrangements within the spirit and/or scope of the underlying inventive concept will become apparent to those skilled in the art from this disclosure.

As used herein, the terms "comprises," "comprising," "includes," "including," "has," "having" or any other variation thereof, are intended to cover a non-exclusive inclusion. For example, a process, article, or apparatus that comprises a list of elements is not necessarily limited to only those elements but may include other elements not expressly listed or inherent to such process, article, or apparatus.

Additionally, any examples or illustrations given herein are not to be regarded in any way as restrictions on, limits to, or express definitions of, any term or terms with which they are utilized. Instead, these examples or illustrations are to be regarded as being described with respect to one particular embodiment and as illustrative only. Those of ordinary skill in the art will appreciate that any term or terms with which these examples or illustrations are utilized will encompass other embodiments which may or may not be given therewith or elsewhere in the specification and all such embodiments are intended to be included within the scope of that term or terms.

In the foregoing specification, the invention has been described with reference to specific embodiments. However, one of ordinary skill in the art appreciates that various modifications and changes can be made without departing from the scope of the invention. Accordingly, the specification and figures are to be regarded in an illustrative rather than a restrictive sense, and all such modifications are intended to be included within the scope of invention.

Although the invention has been described with respect to specific embodiments thereof, these embodiments are merely illustrative, and not restrictive of the invention. The description herein of illustrated embodiments of the invention is not intended to be exhaustive or to limit the invention to the precise forms disclosed herein (and in particular, the inclusion of any particular embodiment, feature or function is not intended to limit the scope of the invention to such embodiment, feature or function). Rather, the description is intended to describe illustrative embodiments, features and functions in order to provide a person of ordinary skill in the art context to understand the invention without limiting the invention to any particularly described embodiment, feature or function. While specific embodiments of, and examples for, the invention are described herein for illustrative purposes only, various equivalent modifications are possible within the spirit and scope of the invention, as those skilled in the relevant art will recognize and appreciate. As indicated, these modifications may be made to the invention in light of the foregoing description of illustrated embodiments of the invention and are to be included within the spirit and scope of the invention. Thus, while the invention has been described herein with reference to particular embodiments thereof, a latitude of modification, various changes and substitutions are intended in the foregoing disclosures, and it will be appreciated that in some instances some features of embodiments of the invention will be employed without a corresponding use of other features without departing from the scope and spirit of the invention as set forth. Therefore, many modifications may be made to adapt a particular situation or material to the essential scope and spirit of the invention.

Respective appearances of the phrases "in one embodiment," "in an embodiment," or "in a specific embodiment" or similar terminology in various places throughout this specification are not necessarily referring to the same embodiment. Furthermore, the particular features, structures, or characteristics of any particular embodiment may be combined in any suitable manner with one or more other embodiments. It is to be understood that other variations and modifications of the embodiments described and illustrated herein are possible in light of the teachings herein and are to be considered as part of the spirit and scope of the invention.

In the description herein, numerous specific details are provided, such as examples of components and/or methods, to provide a thorough understanding of embodiments of the invention. One skilled in the relevant art will recognize, however, that an embodiment may be able to be practiced without one or more of the specific details, or with other apparatus, systems, assemblies, methods, components, materials, parts, and/or the like. In other instances, well-known structures, components, systems, materials, or operations are not specifically shown or described in detail to avoid obscuring aspects of embodiments of the invention. While the invention may be illustrated by using a particular embodiment, this is not and does not limit the invention to any particular embodiment and a person of ordinary skill in the art will recognize that additional embodiments are readily understandable and are a part of this invention.

It will also be appreciated that one or more of the elements depicted in the drawings/figures can also be implemented in a more separated or integrated manner, or even removed or rendered as inoperable in certain cases, as is useful in accordance with a particular application.

Benefits, other advantages, and solutions to problems have been described above with regard to specific embodiments. However, the benefits, advantages, solutions to problems, and any component(s) that may cause any benefit, advantage, or solution to occur or become more pronounced are not to be construed as a critical, required, or essential feature or component.
Further Embodiments:
1. An automated electric vehicle (EV) conditioning system that takes into consideration public transportation information of an EV driver, the system comprising:
   an Electric Vehicle Supply Equipment (EVSE) configured to charge a battery of an EV;
   a Charging Station Management System (CSMS) coupled to the EVSE;
   a public transportation tracking platform coupled to the CSMS for tracking an EV location, a public transportation, and/or an EV driver phone through an EV driver App, which can confirm the EV driver actually hopped on a train or a bus,
   wherein the public transportation tracking platform is coupled to the public transportation such that the EV driver arriving via the public transportation expects the EV ready to travel; and
   an automated mechanism including software instructions of an algorithm to take into consideration public transportation schedules into EV charging by the EVSE,
   wherein the automated electric vehicle (EV) conditioning system permits the EV driver to only set a single target State of Charge (SoC) in the EV or an EV charging App and have the EV actually with that SoC and with a conditioned cabin automatically, without a need for any additional manual interaction.
2. The automated electric vehicle (EV) conditioning system of embodiment 1, wherein a public transportation schedule can be a train schedule or a bus schedule.
3. The automated electric vehicle (EV) conditioning system of embodiment 1, wherein a transportation system has precise tracking of a train schedule and advertise with a high level of accuracy, on an ongoing basis, when trains are arriving to a station and these are available either planned or real-time, for Application Programming Interface (API) integration.
4. The automated electric vehicle (EV) conditioning system of embodiment 1, wherein the automated electric vehicle (EV) conditioning system and the public transportation tracking platform provides a public transportation schedule-based EV conditioning platform.
5. The automated electric vehicle (EV) conditioning system of embodiment 4, wherein the public transportation schedule-based EV conditioning platform performs charging of the EV based on a knowledge about a duration of a period in which the EV driver is going to be away from the EV, as well as an expected return date/time.
6. The automated electric vehicle (EV) conditioning system of embodiment 5, wherein the public transportation schedule-based EV conditioning platform performs charging of the EV based on an expected weather forecast in the period (including accumulation of snow), a temperature outside the EV while not charging, a desired cabin temperature when the EV driver is expected to arrive.
7. The automated electric vehicle (EV) conditioning system of embodiment 6, wherein the public transportation schedule-based EV conditioning platform performs charging of the EV based on an expected arrival driver itinerary while in public transportation, real-time updates about the itinerary, a distance/time between an arrival location (e.g. airport gate/terminal, train station gate), a desired energy to be stored in the EV (or a desired State of Charge(SoC)), a location of the EV/EVSE and a location of the EV driver (from its cellphone).
8. The automated electric vehicle (EV) conditioning system of embodiment 7, wherein the algorithm calculates a necessary energy to be delivered to the EV, and for how long, and at what time interval before the expected EV driver physical arrival to the EV, so the EV has a desired final State of Charge (SoC), it's air conditioner kept the temperature stable, a power that a specific vehicle requires to keep the air conditioner on, and a charging process itself melted snow blocking the EV from moving and doors from opening.
9. The automated electric vehicle (EV) conditioning system of embodiment 8, wherein if the EV driver takes a longer time to arrive than expected, the EVSE can limit that amount of power delivered to the EV to be only what is necessary to keep a cabin conditioned.
10. The automated electric vehicle (EV) conditioning system of embodiment 9, wherein an information about the itinerary is received by the public transportation schedule-based EV conditioning platform through calendar synchronization, or through API integration with airline or train companies, or travel information aggregators.
11. A method of providing an automated electric vehicle (EV) conditioning system that takes into consideration public transportation information of an EV driver, the method comprising:
   providing an Electric Vehicle Supply Equipment (EVSE) configured to charge a battery of an EV;
   providing a Charging Station Management System (CSMS) coupled to the EVSE;
   providing a public transportation tracking platform coupled to the CSMS for tracking an EV location, a public transportation, and/or an EV driver phone through an EV driver App, which can confirm the EV driver actually hopped on a train or a bus,
   wherein the public transportation tracking platform is coupled to the public transportation such that the EV driver arriving via the public transportation expects the EV ready to travel; and
   providing an automated mechanism including software instructions of an algorithm to take into consideration public transportation schedules into EV charging by the EVSE,
   wherein the automated electric vehicle (EV) conditioning system permits the EV driver to only set a single target State of Charge (SoC) in the EV or an EV charging App and have the EV actually with that SoC and with a conditioned cabin automatically, without a need for any additional manual interaction.
12. The method of embodiment 11, wherein a public transportation schedule can be a train schedule or a bus schedule.
13. The method of embodiment 11, wherein a transportation system has precise tracking of a train schedule and advertise with a high level of accuracy, on an ongoing basis, when trains are arriving to a station and these are available either planned or real-time, for Application Programming Interface (API) integration.
14. The method of embodiment 11, wherein the automated electric vehicle (EV) conditioning system and the public transportation tracking platform provides a public transportation schedule-based EV conditioning platform.
15. The method of embodiment 14, wherein the public transportation schedule-based EV conditioning platform performs charging of the EV based on a knowledge about a duration of a period in which the EV driver is going to be away from the EV, as well as an expected return date/time.
16. The method of embodiment 15, wherein the public transportation schedule-based EV conditioning platform performs charging of the EV based on an expected weather forecast in the period (including accumulation of snow), a temperature outside the EV while not charging, a desired cabin temperature when the EV driver is expected to arrive.
17. The method of embodiment 16, wherein the public transportation schedule-based EV conditioning platform performs charging of the EV based on an expected arrival driver itinerary while in public transportation, real-time updates about the itinerary, a distance/time between an arrival location (e.g. airport gate/terminal, train station gate), a desired energy to be stored in the EV (or a desired State of Charge(SoC)), a location of the EV/EVSE and a location of the EV driver (from its cellphone).
18. The method of embodiment 17, wherein the algorithm calculates a necessary energy to be delivered to the EV, and for how long, and at what time interval before the expected EV driver physical arrival to the EV, so the EV has a desired final State of Charge (SoC), it's air conditioner kept the temperature stable, a power that a specific vehicle requires to keep the air conditioner on, and a charging process itself melted snow blocking the EV from moving and doors from opening.
19. The method of embodiment 18, wherein if the EV driver takes a longer time to arrive than expected, the EVSE can limit that amount of power delivered to the EV to be only what is necessary to keep a cabin conditioned.
20. The method of embodiment 19, wherein an information about the itinerary is received by the public transportation schedule-based EV conditioning platform through calendar synchronization, or through API integration with airline or train companies, or travel information aggregators.

## Claims

1. An automated electric vehicle (EV) conditioning system that takes into consideration public transportation information of an EV driver, the system comprising:
an *Electric Vehicle Supply Equipment (EVSE)* configured to charge a battery of an EV;
a Charging Station Management System (CSMS) coupled to the EVSE;
a public transportation tracking platform coupled to the CSMS for tracking an EV location, a public transportation, and/or an EV driver phone through an EV driver App, which can confirm the EV driver actually hopped on a train or a bus,
wherein the public transportation tracking platform is coupled to the public transportation such that the EV driver arriving via the public transportation expects the EV ready to travel; and
an automated mechanism including software instructions of an algorithm to take into consideration public transportation schedules into EV charging by the EVSE,
wherein the automated electric vehicle (EV) conditioning system permits the EV driver to only set a single target State of Charge (SoC) in the EV or an EV charging App and have the EV actually with that SoC and with a conditioned cabin automatically, without a need for any additional manual interaction.

2. The automated electric vehicle (EV) conditioning system of claim 1, wherein a public transportation schedule can be a train schedule or a bus schedule.

3. The automated electric vehicle (EV) conditioning system according to any of the preceding claims, wherein a transportation system has precise tracking of a train schedule and advertise with a high level of accuracy, on an ongoing basis, when trains are arriving to a station and these are available either planned or real-time, for Application Programming Interface (API) integration.

4. The automated electric vehicle (EV) conditioning system according to any of the preceding claims, wherein the automated electric vehicle (EV) conditioning system and the public transportation tracking platform provides a public transportation schedule-based EV conditioning platform.

5. The automated electric vehicle (EV) conditioning system of claim 4, wherein the public transportation schedule-based EV conditioning platform performs charging of the EV based on a knowledge about a duration of a period in which the EV driver is going to be away from the EV, as well as an expected return date/time.

6. The automated electric vehicle (EV) conditioning system of claim 4 or 5, wherein the public transportation schedule-based EV conditioning platform performs charging of the EV based on an expected weather forecast in the period (including accumulation of snow), a temperature outside the EV while not charging, a desired cabin temperature when the EV driver is expected to arrive.

7. The automated electric vehicle (EV) conditioning system of any of the claims 4 to 6, wherein the public transportation schedule-based EV conditioning platform performs charging of the EV based on an expected arrival driver itinerary while in public transportation, real-time updates about the itinerary, a distance/time between an arrival location (e.g. airport gate/terminal, train station gate), a desired energy to be stored in the EV (or a desired State of Charge(SoC)), a location of the EV/EVSE and a location of the EV driver (from its cellphone).

8. The automated electric vehicle (EV) conditioning system of claim 7, wherein the algorithm calculates a necessary energy to be delivered to the EV, and for how long, and at what time interval before the expected EV driver physical arrival to the EV, so the EV has a desired final State of Charge (SoC), it's air conditioner kept the temperature stable, a power that a specific vehicle requires to keep the air conditioner on, and a charging process itself melted snow blocking the EV from moving and doors from opening.

9. The automated electric vehicle (EV) conditioning system of claim 8, wherein if the EV driver takes a longer time to arrive than expected, the EVSE can limit that amount of power delivered to the EV to be only what is necessary to keep a cabin conditioned.

10. The automated electric vehicle (EV) conditioning system of claim 9, wherein an information about the itinerary is received by the public transportation schedule-based EV conditioning platform through calendar synchronization, or through API integration with airline or train companies, or travel information aggregators.

11. A method of providing an automated electric vehicle (EV) conditioning system, in particular an automated electric vehicle (EV) conditioning system according to any of the claim 1 to 10, that takes into consideration public transportation information of an EV driver, the method comprising:
providing an *Electric Vehicle Supply Equipment* (*EVSE*) configured to charge a battery of an EV;
providing a Charging Station Management System (CSMS) coupled to the EVSE;
providing a public transportation tracking platform coupled to the CSMS for tracking an EV location, a public transportation, and/or an EV driver phone through an EV driver App, which can confirm the EV driver actually hopped on a train or a bus,
wherein the public transportation tracking platform is coupled to the public transportation such that the EV driver arriving via the public transportation expects the EV ready to travel; and
providing an automated mechanism including software instructions of an algorithm to take into consideration public transportation schedules into EV charging by the EVSE,
wherein the automated electric vehicle (EV) conditioning system permits the EV driver to only set a single target State of Charge (SoC) in the EV or an EV charging App and have the EV actually with that SoC and with a conditioned cabin automatically, without a need for any additional manual interaction.

12. The method of claim 11, wherein a public transportation schedule can be a train schedule or a bus schedule.

13. The method of claim 11 or 12, wherein a transportation system has precise tracking of a train schedule and advertise with a high level of accuracy, on an ongoing basis, when trains are arriving to a station and these are available either planned or real-time, for Application Programming Interface (API) integration.

14. The method according to any of the preceding claims 11 to 13, wherein the automated electric vehicle (EV) conditioning system and the public transportation tracking platform provides a public transportation schedule-based EV conditioning platform.

15. The method of claim 14, wherein the public transportation schedule-based EV conditioning platform performs charging of the EV based on a knowledge about a duration of a period in which the EV driver is going to be away from the EV, as well as an expected return date/time.
